# EUROPÄISCHE PATENTANMELDUNG

(11) **EP 4 553 729 A1**
(43) Veröffentlichungstag der Anmeldung: **14.05.2025**
(21) Anmeldenummer: 23208803.9
(22) Anmeldetag: 09.11.2023
(51) Int. Cl.: G06Q 10/105, G06Q 10/0631, G06Q 50/10

(54) **SYSTEME UND VERFAHREN ZUM DIGITALEN ANBIETEN, NACHFRAGEN UND VERWALTEN VON PERSONALDIENSTLEISTUNGEN UND DAMIT VERBUNDENER SERVICES**

(71) Anmelder: StaffPay SAAS GmbH, 14059 Berlin (DE)
(72) Erfinder: Stürtz, Simon, 6020 Larnaka (CY)
(74) Vertreter: Köllner, Malte

(57) **Zusammenfassung**

Die Erfindung betrifft Systeme (100), Vorrichtungen und Verfahren zum digitalen Anbieten, Nachfragen und Verwalten von Personaldienstleistungen und damit verbundener Services. Personaldienstleistungen und damit verbundene Services sind nicht nur vielfältig, sondern erfordern in vielen Fällen eine Reihe zusätzlicher Services und bürokratischer Vorgänge. Dies kann oft nur ungenügend oder nur mit großem Aufwand abgebildet werden. Vorgeschlagen wird deshalb ein System (100), das durch eine einfache Auswahl von standardisierten Prozessen, die kompatibel zueinander ausgestaltet sind, das digitale Anbieten, Nachfragen und Verwalten von Personaldienstleistungen und damit verbundener Services ermöglicht. Damit wird nicht nur die Nutzung derartiger Systeme erleichtert. Die vorgeschlagenen Systeme (100) ermöglichen auch eine Vernetzung verschiedener Anbieter untereinander über eine einzige Plattform und damit u.a. auch die Möglichkeit, Personaldienstleistungen und damit verbundene Services nach Bedarf zu skalieren.

## Beschreibung

### Gebiet der Erfindung

Die Erfindung betrifft Systeme, Vorrichtungen und Verfahren zum digitalen Anbieten, Nachfragen und Verwalten von Personaldienstleistungen und damit verbundener Services. Digitales Anbieten und Nachfragen von Waren, Produkten und Dienstleistungen über bspw. das Internet ist weitverbreitet. Entsprechende Systeme oder (Online-)Plattformen sind wohlbekannt. Sie können in vielen Fällen über einen Internet-Browser und/oder über Apps auf einem Smartphone oder Tablet angesteuert bzw. angesprochen werden. Die Systeme bzw. Plattformen weisen hierzu entsprechende digitale Schnittstellen auf. Über die digitalen Schnittstellen können in der Regel sowohl Kunden oder Interessenten als auch Anbieter entsprechender Produkte und Dienstleistungen auf die Systeme bzw. Plattformen zugreifen.

Häufig können Kunden- bzw. Anbieter hierzu entsprechende Profile erstellen. Diese Profile enthalten oft Informationen bzw. Daten, die den Austausch von Waren, Produkten oder Dienstleistungen erst ermöglichen. Kunden können in vielen Fällen zudem Rezensionen zu Anbietern verfassen und diese über die Systeme bzw. Plattformen veröffentlichen. Die Zuverlässigkeit der Anbieter und die Qualität der angebotenen Produkte und Dienstleistungen können auf diese Weise von Kunden bewertet und anderen Kunden zur Verfügung gestellt werden. Zudem weisen viele Plattformen und Systeme Mechanismen zur Erhebung von Zuverlässigkeits- und Qualitätsstatistiken auf, bspw. durch Befragen der Kunden nach Erhalt einer Ware oder einer Dienstleistung.

Es gibt eine Reihe bekannter Systeme und Plattformen, über die eine Vielzahl unterschiedlicher Waren, Produkte und Dienstleistungen in digitaler Weise angeboten, nachgefragt und auch verwaltet werden können. Neben Schuhen, Büchern oder Second-Hand-Waren werden auch Personaldienstleistungen und damit verbundene Services bereits online bzw. digital angeboten und nachgefragt. Dazu gehören Personaldienstleistungen von Handwerkern wie bspw. Elektrikern, Service-Personal bspw. im Festival- oder Gaststättengewerbe oder Lehrkräften. Mit den Personaldienstleistungen verbundene Services werden ebenfalls in digitaler Weise angeboten und nachgefragt. Hierzu gehören Online-Plattformen zum Rekrutieren, On- und Off-Boarding von Personal, Plattformen zur Zeiterfassung, Lohnabrechnung, Buchhaltung, etc.

### Stand der Technik

Für viele Unternehmen ist es inzwischen in zunehmendem Maße unverzichtbar, ihre Dienstleistungen und/oder Services online bzw. in digitaler Weise anzubieten. Dementsprechend weist der Stand der Technik auch eine Vielzahl von Vorrichtungen, Systemen und Verfahren auf, um verschiedene Dienstleistungen und/oder Services online bzw. digital anzubieten, nachzufragen bzw. zu verwalten.

In den australischen Offenlegungsschriften AU 2018/100189 A1 und AU 2019/100014 A1 werden bspw. B2B-Plattformen für den Austausch von Elektrikerarbeit beschrieben. Ähnliche Plattformen schlägt die australische Offenlegungsschrift AU 2018/101622 A1 zum Austausch von Lehrkräften vor. Die chinesische Offenlegungsschrift CN 115713313 A1 sowie die australische Offenlegungsschrift AU 2019/100074 A1 beschreiben Vorrichtungen und Verfahren, um einen Leih- bzw. Zeitarbeiterpool zu verwalten bzw. zu managen. Mithilfe der in der australischen Offenlegungsschrift AU 2019/100082 A1 beschriebenen Verfahren und Vorrichtungen kann zuverlässiges zahnärztliches bzw. medizinisches Personal gefunden und gebucht werden, und mithilfe der in der Offenlegungsschrift AU 2019/100298 A1 beschriebenen Vorrichtungen und Verfahren Personal für rechtliche Dienstleistungen. In den internationalen Patentanmeldungen WO 2016/111898 A1 und WO 2018/075717 A1 werden Systeme und Verfahren beschrieben, mit denen Dienstleister und Kunden in digitaler Weise bzw. online zusammengeführt werden können.

Auch mit Personaldienstleistungen verbundene Services werden in digitaler Weise bzw. online angeboten. Der in der chinesischen Offenlegungsschrift CN 105976119 A1 beschriebene Anwendungsfall betrifft bspw. Buchhaltungsdienstleistungen. Systeme zum Erkennen und Zuordnen von R&D-Dienstleistungen, die von einem Personalpool erbracht werden können, werden in der chinesischen Offenlegungsschrift CN 116187961 A1 beschrieben. Die US-amerikanische Offenlegungsschrift US 2021/272068 A1 beschreibt die (teil)-automatisierte Verwaltung und das Management von Konferenz- und Workshopteilnahmen von Mitarbeitern.

Trotz des vielfältigen Angebots bekannter Systeme, Vorrichtungen und Verfahren stellt die Nutzung bzw. das Erstellen einer Online-Plattform bzw. eines entsprechenden Systems für viele Unternehmen immer noch eine große Hürde dar, gerade wenn es um Personaldienstleistungen bzw. damit verbundene Services geht. Dies liegt u.a. an der Vielfalt und Komplexität vieler Personaldienstleistungen und damit verbundener Services. Entsprechende Angebote zur Digitalisierung und Automatisierung sind dementsprechend ebenfalls vielfältig und komplex. Oft kann nur ein Teil digitalisiert bzw. automatisiert werden. Hinzu kommt mangelndes Wissen bzw. Know-how, welche Systeme überhaupt verfügbar sind bzw. verfügbar gemacht werden können bzw. wie solche Systeme aufzusetzen oder zu bedienen sind. Oft passen die Systeme, Vorrichtungen und Verfahren auch nicht in ausreichendem Maße zu den Bedürfnissen des Unternehmens. Entsprechende Anpassungen und/oder Ergänzungen sind häufig kostspielig und aufwändig. Überdies besteht in vielen Fällen große Unsicherheit bezüglich der mit der Nutzung entsprechender Systeme einhergehenden Sicherheitsrisiken, so dass im Zweifel von der Nutzung Abstand genommen wird. Ein weiteres Problem stellen bürokratische Hürden dar. Anders als bei vielen Waren und Produkten erfordern Personaldienstleistungen in der Regel eine Vielzahl von zusätzlichen Services und bürokratischen Vorgängen, die mithilfe bekannter Systeme, Vorrichtungen und Verfahren überhaupt nicht oder nur ungenügend abgebildet werden können. Dies schmälert den Mehrwert, den der Einsatz einer Online-Plattform oder eines entsprechenden Systems bietet, oft erheblich.

### Aufgabe

Aufgabe der Erfindung ist es, Systeme, Vorrichtungen und Verfahren zur Verfügung zu stellen, die es Unternehmen erleichtern, Personaldienstleistungen und/oder mit den Personaldienstleistungen verbundene Services online bzw. in digitaler Weise anzubieten, nachzufragen und zu verwalten.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte werden in einer bevorzugten Variante der Erfindung in der angegebenen Reihenfolge ausgeführt. Die Schritte müssen aber nicht notwendigerweise in der angegebenen Reihenfolge durchgeführt werden, und das zu schildernde Verfahren kann auch weitere, nicht genannte Schritte aufweisen.

Zur Lösung der Aufgabe wird ein System zum digitalen Anbieten, digitalen Nachfragen und digitalen Verwalten von Personaldienstleistungen und mit den Personaldienstleistungen verbundenen Services vorgeschlagen. Das System weist mindestens eine digitale Schnittstelle auf, die ausgebildet ist, um einer Mehrzahl von Anbietern mindestens einer der Personaldienstleistungen und/oder mindestens eines der mit den Personaldienstleistungen verbundenen Services digitalen Zugriff auf das System zu ermöglichen. Das System ist zudem ausgebildet, um standardisierte Prozesse zum digitalen Anbieten, digitalen Nachfragen und digitalen Verwalten der Personaldienstleistungen und der mit den Personaldienstleistungen verbundenen Services auszuführen. Die standardisierten Prozesse sind dabei derart ausgebildet, dass Daten, die mithilfe eines standardisierten Prozesses erhoben und/oder gewonnen wurden und bei der Ausführung eines anderen standardisierten Prozesses benötigt werden, in automatischer Weise dem anderen standardisierten Prozess zur Verfügung stehen. Das System weist zudem eine Dokumentation der standardisierten Prozesse nach einem standardisierten Verfahren auf und ist darüber hinaus ausgebildet, um der Mehrzahl der Anbieter über die mindestens eine digitale Schnittstelle Zugriff auf die Dokumentation der standardisierten Prozesse nach dem standardisierten Verfahren zu ermöglichen. Des Weiteren ist das System ausgebildet, um einem Anbieter aus der Mehrzahl der Anbieter über die mindestens eine digitale Schnittstelle eine Auswahl der standardisierten Prozesse zu ermöglichen, wobei der Anbieter durch die Auswahl der standardisierten Prozesse festlegt,
- welche der Personaldienstleistungen und/oder der mit den Personaldienstleistungen verbundenen Services der Anbieter mithilfe des Systems digital anbietet,
- welche der Personaldienstleistungen und/oder der mit den Personaldienstleistungen verbundenen Services der Anbieter mithilfe des Systems digital verwaltet und
- welche der Personaldienstleistungen und/oder der mit den Personaldienstleistungen verbundenen Services der Anbieter bei einem anderen Anbieter oder mehreren anderen Anbietern aus der Mehrzahl der Anbieter digital nachfragt.

Zudem ist das System ausgebildet, um dem Anbieter aus der Mehrzahl der Anbieter zu ermöglichen, gemäß der Auswahl der standardisierten Prozesse die Personaldienstleistungen und die mit den Personaldienstleistungen verbundenen Services digital anzubieten, digital nachzufragen und/oder digital zu verwalten.

Mithilfe des vorgeschlagenen Systems kann ein Anbieter mindestens einer Personaldienstleistung und/oder eines mit Personaldienstleistungen verbundenen Services über die mindestens eine digitale Schnittstelle, bspw. mithilfe eines Smartphones, Tablets oder eines Internet-Browsers, auf das System zugreifen. Der Anbieter hat damit auch Zugriff auf die standardisierten Prozesse sowie auf die Dokumentation derselben und kann somit diejenigen standardisierten Prozesse auswählen, mit denen er mindestens eine Personaldienstleistung mithilfe des Systems digital anbieten, digital nachfragen und/oder digital verwalten lassen möchte. Der Anbieter kann hierzu einen oder mehrere standardisierte Prozesse auswählen. Er kann auch keinen Prozess auswählen, falls er bspw. keine Dienstleistung mithilfe des Systems nachfragen möchte. Das gilt auch für das digitale Anbieten und Verwalten von Personaldienstleistungen und mit Personaldienstleistungen verbundenen Services mithilfe des Systems. Das System ermöglicht es damit einem Anbieter durch eine schlichte Auswahl von standardisierten Prozessen, Personaldienstleistungen und/oder mit den Personaldienstleistungen verbundene Services in digitaler Form bspw. online anzubieten, nachzufragen und/oder zu verwalten.

Der Anbieter muss also lediglich eine Auswahl der standardisierten Prozesse treffen, um mithilfe des Systems eine Personaldienstleistung oder einen mit Personaldienstleistungen verbundenen Service in digitaler Weise bspw. online anzubieten, nachzufragen oder zu verwalten. Eine Programmierung oder Anpassung von Prozessen bspw. durch den Anbieter oder einen entsprechenden Dienstleister ist nicht notwendig. Verschiedene Anbieter können zudem auf ein und denselben standardisierten Prozess oder eine Mehrzahl gleicher standardisierter Prozesse zurückgreifen und für ihre Zwecke nutzen. Dies gilt auch dann, wenn es sich um Anbieter unterschiedlicher (Personal-)Dienstleistungen und/oder Services handelt. Auf diese Weise kann vermieden werden, dass eine Vielzahl gleicher oder sehr ähnlicher Prozesse durch das System vorgehalten werden muss, um die unterschiedlichen Bedürfnisse der verschiedenen Anbieter abzubilden, und zwar auch dann, wenn es sich um Anbieter unterschiedlicher (Personal-)Dienstleistungen und/oder Services handelt. Dies reduziert die Komplexität und den Aufwand zum Betrieb und auch der Bedienung des Systems, in vielen Fällen sogar in erheblichem Maße.

Durch die Standardisierung der Prozesse ist sichergestellt, dass alle standardisierten Prozesse zu- bzw. miteinander kompatibel sind bzw. dass der Austausch von Daten, die durch einen standardisierten Prozess erhoben und/oder gewonnen werden und von einem anderen standardisierten Prozess benötigt werden, in automatischer Weise dem anderen standardisierten Prozess zur Verfügung stehen. Ein Transfer von Daten oder eine Umformatierung von Daten kann somit entfallen. Zudem kann sichergestellt werden, dass die Ausführung eines standardisierten Prozesses nicht davon abhängt, für welchen Anbieter aus der Mehrzahl von Anbietern er ausgeführt wird. Des Weiteren ist es möglich, dass alle standardisierten Prozesse, die das System ausführen kann, von allen Anbietern genutzt werden können. Es ist aber auch möglich, dass der Zugriff eines Anbieters auf bestimmte standardisierte Prozesse nach Bedarf beschränkt wird, bspw. um die Bedienung des Systems zu erleichtern.

Zudem können die standardisierten Prozesse in Gruppen eingeteilt sein und/oder mithilfe einer Verzeichnisstruktur organisiert sein und/oder Modulen zugeordnet sein, um ebenfalls die Bedienbarkeit des Systems zu erhöhen und v.a. die Auswahl der standardisierten Prozesse zu erleichtern. Die Einteilung der Prozesse in Gruppen, Verzeichnissen und/oder Modulen kann auch mithilfe von Apps, Programmen und/oder Funktionen erfolgen, die je nach Bedarf von einem Anbieter aus der Mehrzahl der Anbieter freigeschaltet werden können. Das System ist vorzugsweise derart ausgestaltet, dass ein Anbieter nicht jeden standardisierten Prozess einzeln auswählen muss, sondern eine Gruppe von Prozessen und/oder ein Modul auswählt, um bestimmte Funktionen des Systems auszuwählen und die entsprechenden Prozesse durch das System ausführen zu lassen.

Der Anbieter kann mithilfe des Systems nicht nur mindestens eine Personaldienstleistung und/oder mindestens einen mit den Personaldienstleistungen verbundenen Service anbieten, sondern auch nachfragen. Jeder Anbieter aus der Mehrzahl von Anbietern kann demnach auch mindestens eine Personaldienstleistung und/oder mindestens einen mit den Personaldienstleistungen verbundenen Service eines anderen Anbieters mithilfe des Systems nachfragen und in Anspruch nehmen oder einem anderen Anbieter anbieten. Auf diese Weise können sich Anbieter miteinander vernetzen, um bspw. Dienstleistungen und/oder Services bzw. entsprechende Pakete von Dienstleistungen und/oder Services, die ein Anbieter alleine gar nicht anbieten kann, bspw. weil das dafür nötige Personal und/oder Know-how fehlt oder der finanzielle bzw. bürokratische Aufwand für einen Anbieter alleine zu groß wäre, gemeinsam anzubieten. Dies erleichtert in vielen Fällen gerade kleineren Anbietern bzw. Unternehmen den Markteintritt, da mithilfe des Systems fehlendes Personal bzw. Know-how in einfacher Weise hinzugezogen werden kann und finanzielle sowie bürokratische Hürden leichter genommen werden können. Somit können sich Anbieter auf ihre Kernkompetenzen konzentrieren und auf eine oder wenige Personaldienstleistungen und/oder damit verbundene Services fokussieren, weil sie nicht mehr eine Vielzahl verschiedener Personaldienstleistungen und damit verbundene Services selbst abbilden müssen. Dies kann Ressourcen freisetzen, die bspw. zur Entwicklung des eigenen Kerngeschäfts und damit zur Verbesserung der Innovationskraft genutzt werden können.

Mit dem vorgeschlagenen System ist es zudem möglich, dass ein Anbieter sein Angebot an eine bestehende oder sich ändernde Nachfrage anpasst und/oder entsprechend skaliert. Fehlendes Personal bzw. Fachkräfte können mithilfe des Systems angefragt und eingekauft werden. Der mit der Anstellung von Personal bzw. Fachkräften verbundene bürokratische Aufwand kann ebenfalls mithilfe des Systems erledigt bzw. an andere Anbieter übergeben bzw. ausgelagert werden. Damit eignet sich das System insbesondere für Arbeitnehmerüberlassungen bzw. zur Nutzung durch entsprechende Dienstleister, White-Label-Firmen bzw. Zeitarbeitsfirmen sowie zum Rollout von Franchise-Konzepten.

Zudem reicht es in vielen Fällen aus, sich des vorgeschlagenen Systems zu bedienen. Ein Rückgriff auf eine Vielzahl unterschiedlicher Systeme, die häufig auch nicht miteinander kompatibel sind, sowie der Aufbau entsprechenden Know-hows und der Aufwand, um eine entsprechende Auswahl aus der Vielzahl unterschiedlicher Systeme zu treffen, kann damit entfallen.

Das digitale Anbieten, Nachfragen und/oder Verwalten kann bspw. mithilfe von (Online- )Plattformen erfolgen. Das vorgeschlagene System kann zu diesem Zweck dazu ausgebildet sein, entsprechende Plattformen automatisch zu erzeugen bzw. anzubieten und/oder bestehende Plattformen hierzu anzupassen und/oder entsprechend zu verwalten. Des Weiteren ist es möglich, dass das System entsprechende Programme bspw. zur lokalen Installation auf einem PC oder Apps bspw. zur Installation auf einem Smartphone und/oder Tablet erzeugt und/oder über einen Programm- bzw. App-Store in digitaler Weise anbietet. Eine Kombination aus Progamm bzw. App und einer (Online-)Plattform ist für diese Zwecke ebenfalls denkbar. Ein Anbieter aus der Mehrzahl der Anbieter kann demnach auswählen, in welcher Form Personaldienstleistungen und mit den Personaldienstleistungen verbundene Service mithilfe des Systems in digitaler Weise angeboten, nachgefragt und/oder verwaltet werden.

Das standardisierte Verfahren zur Dokumentation der standardisierten Prozesse kann bspw. ein Verfahren gemäß der ISO-Norm 9001 sein, d.h. die Dokumentation der standardisierten Prozesse kann mithilfe des vorgeschlagenen Systems gemäß der ISO-Norm 9001 umgesetzt werden. Die Dokumentation kann über ein Prozess-Handbuch, welches über das System in digitaler Weise zugänglich sein kann, den Anbietern aus der Mehrzahl der Anbieter zur Verfügung gestellt werden. Die Dokumentation der standardisierten Prozesse erleichtert nicht nur die Bedienung des Systems, sondern auch die Diagnose und Behebung möglicher Fehler.

Das System kann eine Vorrichtung zur Datenverarbeitung bzw. System zur Datenverarbeitung sein. Die Vorrichtung zur Datenverarbeitung bzw. das System zur Datenverarbeitung kann mithilfe einer entsprechenden Programmierung bzw. Programmen eingerichtet sein, um die Funktionen und Merkmale des vorgeschlagenen Systems bereitzustellen bzw. abzubilden. Es kann Cloud-basiert und/oder ein verteiltes Rechnernetzwerk und/oder Teil eines verteilten Rechnernetzwerks sein. Das System kann bspw. ein PC oder ein Server einer Server-Client-Architektur sein. Die Clients der Server-Client-Architektur greifen dabei über die mindestens eine digitale Schnittstelle auf den Server zu. Dieser Zugriff kann bspw. über das Internet erfolgen, d.h. der Server ist online mithilfe einer Vielzahl verschiedener Clients, wie bspw. Smartphones, Tablets oder PCs, ansprechbar. Das System kann aber auch Teil eines nicht öffentlichen Intranets sein, um bspw. interne Prozesse digital anzubieten, nachzufragen und/oder zu verwalten. Das vorgeschlagene System kann demnach mithilfe einer Vielzahl von Hardwarelösungen und Netzwerkarchitekturen umgesetzt werden.

Die standardisierten Prozesse können Prozesse zum digitalen Anbieten und digitalen Nachfragen mindestens einer der Personaldienstleistungen und/oder mindestens eines der mit den Personaldienstleistungen verbundenen Services, Prozesse zum digitalen Rekrutieren, digitalen Qualifizieren und/oder digitalen Managen von Personal zur Erbringung mindestens einer der Personaldienstleistungen und/oder mindestens eines der mit den Personaldienstleistungen verbundenen Services, Prozesse zum elektronischen Kommunizieren, Prozesse zur elektronischen Vertragserstellung und/oder zum elektronischen Signieren, Prozesse zur elektronischen Dokumentenverwaltung, Prozesse zum digitalen Controlling und/oder digitalen Dokumentieren einer erbrachten Personaldienstleistung und/oder eines erbrachten Service und/oder Prozesse zum digitalen Abrechnen einer erbrachten Personaldienstleistung und/oder eines erbrachten Service umfassen. Demnach ist es mithilfe des Systems möglich, so gut wie alle oder zumindest so viele Prozesse wie möglich und/oder nötig abzubilden, um mithilfe des Systems die Personaldienstleistungen und die damit verbundenen Services digital anzubieten, nachzufragen und digital zu verwalten.

Die Prozesse zum digitalen Rekrutieren können des Weiteren mindestens einen Prozess zum digitalen Ausschreiben von Stellen und/oder Anbieten von Personal, mindestens einen Prozess zum digitalen Bewerbungsmanagement und/oder mindestens einen Prozess zum digitalen Erstellen und/oder digitalen Gestalten von Arbeitsverträgen umfassen. Mithilfe dieser Prozesse kann somit fehlendes Personal leicht gewonnen werden und zur Skalierung eingesetzt werden, bspw. zur Abarbeitung eines Großauftrags. Darüber hinaus können personelle Überkapazitäten über das System anderen Anbietern angeboten und auf diese Weise gewinnbringend genutzt werden.

Die Prozesse zum digitalen Qualifizieren können überdies mindestens einen Prozess zum digitalen Ausbilden, mindestens einen Prozess zum digitalen Schulen und/oder mindestens einen Prozess zum digitalen Trainieren umfassen. Mithilfe des Systems können demnach auch ungelernte bzw. unqualifizierte Kräfte angelernt, trainiert und/oder geschult werden und damit zur Erbringung der Personaldienstleistungen und der damit verbundenen Services genutzt werden.

Darüber hinaus können die Prozesse zum digitalen Managen von Personal mindestens einen Prozess zur digitalen Disposition, Personalplanung, Arbeitseinteilung, mindestens einen Prozess zum digitalen Erstellen eines Arbeits- und/oder Dienstplans, mindestens einen Prozess zur digitalen Kalender- und/oder Terminverwaltung, mindestens einen Prozess zur digitalen Lohn- und/oder Gehaltsabrechnung und/oder mindestens einen Prozess zum digitalen An- oder Abmelden bei mindestens einem Sozialversicherer umfassen. Dies ermöglicht eine zentrale Arbeitszeiterfassung und ein zentrales Personalmanagement, auf das bei Bedarf von vielen Standorten aus zugegriffen werden kann.

Die Prozesse zum elektronischen Kommunizieren können mindestens einen Prozess zum Kommunizieren via E-Mail und/oder SMS und/oder einem Instant-Messaging-Dienst und/oder mindestens einen Prozess zum digitalen Telefonieren umfassen, d.h. bspw. zum cloud basierten Telefonieren, zur Nutzung von IP-Telefonie bzw. VolP (Voice-over-IP). Damit ist es bspw. möglich, Text- oder Sprachnachrichten wie bspw. "Bin auf dem Weg" mithilfe des Systems zu versenden.

Die Prozesse zum digitalen Controlling können mindestens einen Prozess zur digitalen Laufzeitkontrolle, mindestens einen Prozess zum digitalen Berichten eines Vorgangs, der mit mindestens einer der Personaldienstleistungen und/oder eines der mit den Personaldienstleistungen verbundenen Services verknüpft ist, eines Standorts und/oder eines Kunden-Feedbacks und/oder mindestens einen Prozess zum Bewerten der Zuverlässigkeit eines Anbieters aus der Mehrzahl der Anbieter umfassen. Der mindestens eine Prozess zum Berichten eines Standorts kann bspw. mithilfe von Geo-Daten umgesetzt werden, sodass bspw. Laufzeitkontrollen (Check-in/-out) mithilfe der Geo-Daten angereichert und auf diese Weise zuverlässiger bzw. fälschungssicherer gestaltet werden können.

Zudem kann mindestens einer der standardisierten Prozesse aus der Auswahl der standardisierten Prozesse zu einem bestimmten Zeitpunkt und/oder in regelmäßigen Intervallen ausgeführt werden. Dies ermöglicht es, automatische Dienste und/oder Robots und/oder Bots einzurichten, um bspw. einmal monatlich abzurechnen, Erinnerungsmails zu einem bestimmten Zeitpunkt oder in regelmäßigen Intervallen zu versenden, etc.

Das System kann zudem ausgebildet sein, um dem Anbieter aus der Mehrzahl der Anbieter über die mindestens eine digitale Schnittstelle eine Änderung der Auswahl der standardisierten Prozesse zu ermöglichen. Anbieter können damit ihr Angebot und/oder ihre Nachfrage und/oder ihre Verwaltungsaufgabe(n), die sie mithilfe des Systems erledigen lassen möchten, nach Bedarf ändern.

Die standardisierten Prozesse umfassen vorzugsweise alle Prozesse, die zum digitalen Anbieten, digitalen Nachfragen und digitalen Verwalten der Personaldienstleistungen und der mit den Personaldienstleistungen verbundenen Services benötigt werden. Um dies sicherzustellen, kann das System mit einer digitalen Administratorschnittstelle ausgestattet sein, die es einem Administrator des Systems ermöglicht, dem System einen neuen standardisierten Prozess hinzuzufügen oder einen standardisierten Prozess zu ändern. Die mindestens eine digitale Schnittstelle kann in derselben Art und Weise ausgestaltet sein. Auf diese Weise kann auf eine Änderung reagiert werden, wie bspw. eine der Personaldienstleistungen und/oder ein damit verbundener Service zu erbringen ist oder erbracht werden soll. Dies können bspw. zusätzliche bürokratische Anforderungen sein, Sicherheitspatches und/oder - updates oder ein neuer Prozess zum Kommunizieren mithilfe eines neuen Kommunikationsmittels. Es kann sich auch um die Änderung oder den Wegfall einer bürokratischen Anforderung oder dergleichen handeln. Ebenso ist es denkbar, dass bspw. aufgrund einer Anfrage eines Anbieters aus der Mehrzahl der Anbieter eine neue Personaldienstleistung und/oder ein Service mithilfe des Systems in digitaler Weise angeboten, nachgefragt oder verwaltet werden soll. Ein Administrator kann mit den genannten Schnittstellen entsprechende neue standardisierte Prozesse in das System einpflegen und dem Anbieter und/oder auch den anderen Anbietern zur Verfügung stellen.

So können bspw. die Prozesse zur elektronischen Vertragserstellung abgeändert werden, um Vertragsvorlagen zu aktualisieren, zu ergänzen und/oder neue Vertragsvorlagen zu erstellen. Dies gilt auch für die anderen genannten Prozesse, die ebenfalls aktualisiert, ergänzt und um neue Funktionalitäten angereichert werden können.

Änderungen an den Prozessen können über die o.g. Dokumentation bzw. das o.g. Prozess-Handbuch dokumentiert und mithilfe des Systems einem bzw. jedem Anbieter aus der Mehrzahl der Anbieter kommuniziert werden. Das System kann auch derart ausgestaltet sein, dass derartige Änderungen zunächst einer Auswahl der Anbieter oder allen Anbietern kommuniziert werden und nur mit vorheriger Zustimmung der Auswahl der Anbieter oder aller Anbieter umgesetzt werden können.

Die Aufgabe wird zudem gelöst durch ein Verfahren zum digitalen Anbieten, digitalen Nachfragen und/oder digitalen Verwalten mindestens einer Personaldienstleistung und/oder mindestens eines mit einer Personaldienstleistung verbundenen Service eines Anbieters der mindestens einen Personaldienstleistung und/oder des mindestens einen mit einer Personaldienstleistung verbundenen Service, wobei die mindestens eine Personaldienstleistung und/oder der mindestens eine mit einer Personaldienstleistung verbundene Service mithilfe eines der soeben vorgeschlagenen Systeme digital angeboten, digital nachgefragt und/oder digital verwaltet wird.

Das System kann so ausgestaltet sein, dass es mithilfe von Algorithmen automatisch erkennt, welche Personaldienstleistung und/oder welchen mit einer Personaldienstleistung verbundenen Service ein Anbieter in digitaler Form anbieten, nachfragen und/oder verwalten möchte, bspw. anhand online verfügbarer Daten über den Anbieter oder von Daten, die der Anbieter in ein zugehöriges Profil einpflegt. Vorzugsweise wird dem Anbieter jedoch mithilfe der mindestens einen digitalen Schnittstelle digitaler Zugriff auf das System gewährt und dem Anbieter eine Auswahl der standardisierten Prozesse ermöglicht. Das digitale Anbieten, digitale Nachfragen und/oder digitale Verwalten der mindestens einen Personaldienstleistung und/oder des mindestens einen mit einer Personaldienstleistung verbundenen Service erfolgt dann anhand dieser Auswahl. Der Anbieter hat somit die Kontrolle darüber, welche Personaldienstleistung und/oder welchen mit einer Personaldienstleistung verbundenen Service er mithilfe des Systems anbieten, nachfragen und/oder verwalten möchte.

Zudem löst ein Computerprogramm, umfassend Befehle, die bewirken, dass eines der vorgeschlagenen Systeme die Verfahrensschritte eines der soeben vorgeschlagenen Verfahren ausführt, die Aufgabe.

Eine Lösung der genannten Aufgabe stellt zudem ein computerlesbares Medium, auf dem das soeben beschriebene Computerprogramm gespeichert ist.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: ein Cloud-basiertes System zum digitalen Anbieten, digitalen Nachfragen und digitalen Verwalten von Personaldienstleistungen und mit den Personaldienstleistungen verbundenen Services;
- Fig. 2: das in Fig. 1 gezeigte System, das mit einem Tablet, Smartphone und einen PC verbunden ist; und
- Fig. 3: einen Ablaufplan eines erfindungsgemäßen Verfahrens.

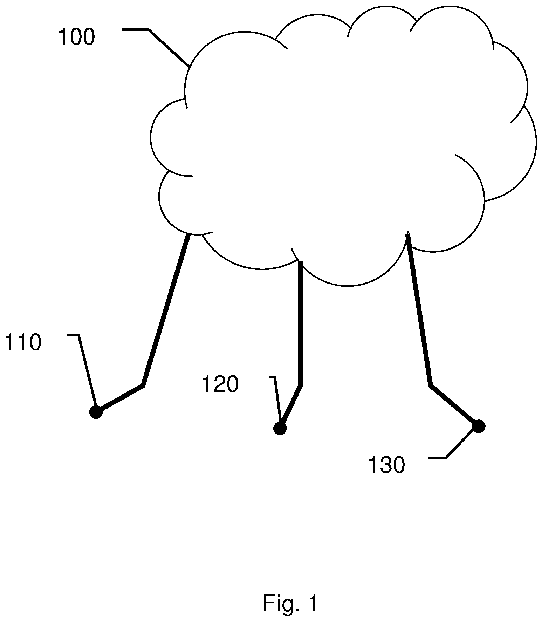

Fig. 1 zeigt ein Cloud-basiertes System 100. Das Cloud-basierte System 100 weist digitale Schnittstellen 110, 120 und 130 auf. Die digitalen Schnittstellen 110, 120 und 130 ermöglichen Nutzern digitalen Zugriff auf das Systems 100.

Das Cloud-basierte System 100 bietet über die digitalen Schnittstellen 110, 120 und 130 Anbietern von Personaldienstleistungen und mit den Personaldienstleistungen verbundenen Services, wie bspw. White-Label- und/oder Zeitarbeitsfirmen, Zugang zu einer Reihe von standardisierten Prozessen, d.h. einer Sammlung von Software- und Anwendungsprogrammen. Die standardisierten Prozesse bzw. die Software- und Anwendungsprogramme ermöglichen es den Anbietern, mithilfe des Systems Personaldienstleistungen und mit den Personaldienstleistungen verbundenen Services in digitaler Form bzw. online anzubieten, nachzufragen und zu verwalten.

Mit den Schnittstellen 110, 120 und 130 wird auch Kunden bzw. Interessenten der mithilfe des Systems 100 angebotenen Personaldienstleistungen und der damit verbundenen Services Zugriff auf das System ermöglicht. Die Kunden bzw. Interessenten können damit mindestens eine Personaldienstleistung und/oder mindestens einen mit den Personaldienstleistungen verbundenen Service in digitaler Weise mithilfe des Systems nachfragen und ihren Bedürfnissen entsprechend auch verwalten.

Die standardisierten Prozesse bzw. Software- und Anwendungsprogramme des Systems 100 laufen auf einem verteilten Rechnernetzwerk. Das Rechnernetzwerk ist derart ausgestaltet, dass je nach Nutzung bzw. Auslastung des Systems mehr oder weniger Computerressourcen dem System 100 zugewiesen werden. Dies ermöglicht nicht nur eine effiziente Nutzung der Computerressourcen, sondern stellt auch sicher, dass das System nach Bedarf bzw. Auslastung durch die Anbieter, Kunden bzw. Interessenten in einfacher Weise skaliert werden kann.

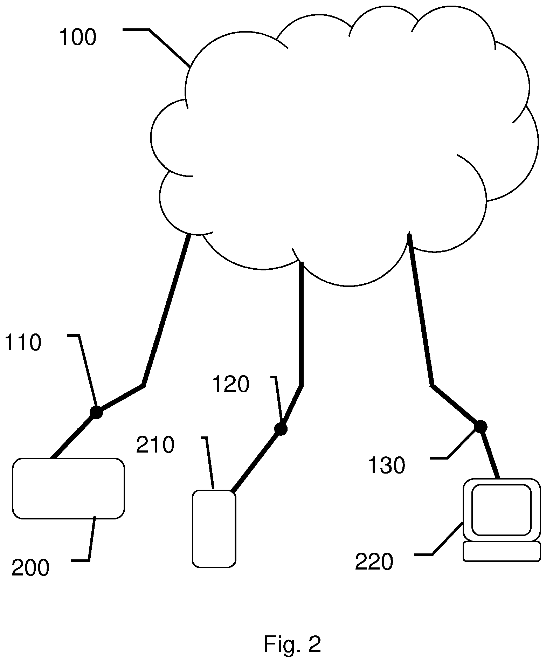

Fig. 2 zeigt das in Fig. 1 gezeigte System 100, wobei das System 100 mit einem Tablet 200, einem Smartphone 210 und einem PC 220 verbunden ist. Die Verbindung des Systems 100 mit dem Tablet 200 erfolgt dabei über die digitale Schnittstelle 110. Das Smartphone 210 ist über die digitale Schnittstelle 120 mit dem System 100 verbunden. Die Verbindung des PC 220 mit dem System 100 erfolgt über die digitale Schnittstelle 130.

Die Schnittstellen 110, 120 und 130 sind universell in dem Sinne, dass über die Schnittstelle 110 nicht nur mit dem Tablet 200 auf das System 100 zugegriffen werden kann, sondern auch mit dem Smartphone 210 oder dem PC 220. Ähnliches gilt - *mutatis mutandis* - für die Schnittstellen 120 und 130.

Der Zugriff auf das System 100 über den PC 220, das Tablet 200 und das Smartphone 210 erfolgt über einen Webbrowser. Eine Installation zusätzlicher Programme bzw. Apps ist demnach in vielen Fällen nicht notwendig. Auf dem Tablet 200, dem Smartphone 210 und dem PC 220 können jedoch auch entsprechende Programme und/oder Apps installiert und für den Zugriff auf und die Bedienung des Systems 100 genutzt werden.

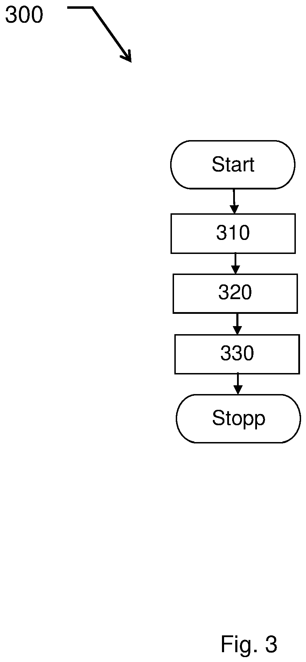

Fig. 3 zeigt einen Ablaufplan eines erfindungsgemäßen Verfahrens 300. Das Verfahren beginnt mit Schritt 310. In dem Schritt 310 wird einem Anbieter von Payrolling-Dienstleistungen Zugriff auf das System 100 gewährt, und zwar über die digitale Schnittstelle 120. Der Zugriff erfolgt über ein Smartphone des Anbieters, auf dem ein entsprechender Webbrowser installiert ist, um eine entsprechende Anfrage zu generieren und an das System 100 zu senden.

In Schritt 320 wählt der Anbieter mithilfe des Browsers und über die digitale Schnittstelle 120 standardisierte Prozesse des Systems 100 aus, um seine Payrolling-Dienstleistungen mithilfe des Systems 100 online bzw. in digitaler Weise potentiellen Kunden bzw. Interessenten anzubieten.

Nachdem der Anbieter seine Auswahl in Schritt 320 getroffen hat, werden in Schritt 330 die Payrolling-Dienstleistungen mithilfe des Systems 100 online bzw. in digitaler Weise potentiellen Kunden bzw. Interessenten angeboten.

Kunden bzw. Interessenten können auf diese Weise die Payrolling-Dienste des Anbieters in Anspruch nehmen. Dabei können die Kunden bzw. Interessenten selbst Anbieter von Personaldienstleistungen und/oder mit den Personaldienstleistungen verbundenen Services sein. Bspw. können White-Label-Unternehmen mit Arbeitnehmerüberlassung die über das System 100 angebotenen Payrolling-Dienste online bzw. digital nachfragen und bei Bedarf buchen. Auf diese Weise können Anbieter verschiedener Personaldienstleistungen und damit verbundener Services miteinander vernetzt bzw. verbunden werden. Jeder der Anbieter kann sich dabei auf seine Kernkompetenzen konzentrieren und diese anbieten. Dienstleistungen, die außerhalb der Kernkompetenzen liegen, können mithilfe des Systems 100 an andere Anbieter ausgelagert werden.

Neben Payrolling-Diensten können auch Rekrutierungs-, Trainings-, Schulung- und Ausbildungsdienste über das System 100 angeboten werden. Hierzu müssen die entsprechenden Anbieter dieser Dienstleistungen lediglich eine andere Auswahl der über das System 100 zur Verfügung gestellten standardisierten Prozesse treffen. Sollte das System 100 dabei nicht über die richtigen standardisierten Prozesse verfügen, kann ein Administrator den fehlenden Prozess über eine der digitalen Schnittstellen 110, 120 und 130 dem System 100 hinzufügen und dem einen oder mehreren anderen Anbietern über das System 100 zur Verfügung stellen.

Zudem ist der Anbieter der Payrolling-Dienste nicht darauf beschränkt, nur Payrolling-Dienste anzubieten. Er kann auch Buchhaltungsdienste über das System 100 anbieten und muss hierzu ebenfalls nur die Auswahl der standardisierten Prozesse des Systems 100 anpassen. Er kann diese Anpassung zu jeder Zeit vornehmen.

Das System 100 kann von anderen Dienstleistern in der gleichen Weise genutzt werden. Es erleichtert somit einer Vielzahl von Anbietern gleicher und/oder unterschiedlicher Personaldienstleistungen und damit verbundener Services sich zu vernetzen. Zudem wird den Anbietern der Markteintritt erheblich erleichtert, da mit dem System Personaldienstleistungen und damit verbundene Services durch eine schlichte Auswahl von standardisierten Prozessen nach Bedarf in digitaler Form bzw. online angeboten, nachgefragt und/oder verwaltet werden können. Die Anbieter können dabei ein und dieselbe Plattform, d.h. das System 100, nutzen. Sie müssen sich demnach nicht zwischen verschiedenen Plattformen entscheiden, deren Eigenschaften bewerten und etwaig vorhandene Inkompatibilitäten ausgleichen.

### Bezugszeichen

- 100: Cloud-basiertes System zum digitalen Anbieten, digitalen Nachfragen und digitalen Verwalten von Personaldienstleistungen und mit den Personaldienstleistungen verbundenen Services
- 110: digitale Schnittstelle des Cloud-basierten Systems 100
- 120: digitale Schnittstelle des Cloud-basierten Systems 100
- 130: digitale Schnittstelle des Cloud-basierten Systems 100

- 200: Tablet
- 210: Smartphone
- 220: PC

- 300: Verfahren zum digitalen Anbieten von Payrolling-Diensten
- 310: Zugreifen auf das System 100
- 320: Auswählen standardisierter Prozesse zum digitalen Anbieten der Payrolling-Dienste
- 330: Digitales Anbieten der Payrolling-Dienste

### zitierte Literatur

### zitierte Patentliteratur

AU 2018/100189 A1
AU 2018/101622 A1
AU 2019/100014 A1
AU 2019/100074 A1
AU 2019/100082 A1
AU 2019/100298 A1
CN 105976119 A1
CN 115713313 A1
CN 116187961 A1
US 2021/272068 A1
WO 2016/111898 A1
WO 2018/075717 A1

## Patentansprüche

1. System (100) zum digitalen Anbieten, digitalen Nachfragen und digitalen Verwalten von Personaldienstleistungen und mit den Personaldienstleistungen verbundenen Services;
1.1 wobei das System (100) mindestens eine digitale Schnittstelle (110, 120, 130) aufweist;
1.1.1 wobei die mindestens eine digitale Schnittstelle (110, 120, 130) ausgebildet ist, um einer Mehrzahl von Anbietern mindestens einer der Personaldienstleistungen und/oder mindestens eines der mit den Personaldienstleistungen verbundenen Services digitalen Zugriff auf das System (100) zu ermöglichen;
1.2 wobei das System (100) ausgebildet ist, um standardisierte Prozesse zum digitalen Anbieten, digitalen Nachfragen und digitalen Verwalten der Personaldienstleistungen und der mit den Personaldienstleistungen verbundenen Services auszuführen;
1.3 wobei die standardisierten Prozesse derart ausgebildet sind, dass Daten, die mithilfe eines standardisierten Prozesses erhoben und/oder gewonnen wurden und bei der Ausführung eines anderen standardisierten Prozesses benötigt werden, in automatischer Weise dem anderen standardisierten Prozess zur Verfügung stehen;
1.3.1 wobei das System (100) eine Dokumentation der standardisierten Prozesse nach einem standardisierten Verfahren aufweist;
1.3.2 wobei das System (100) ausgebildet ist, um der Mehrzahl der Anbieter über die mindestens eine digitale Schnittstelle (110, 120, 130) Zugriff auf die Dokumentation der standardisierten Prozesse nach dem standardisierten Verfahren zu ermöglichen;
1.4 wobei das System (100) ausgebildet ist, um einem Anbieter aus der Mehrzahl der Anbieter über die mindestens eine digitale Schnittstelle (110, 120, 130) eine Auswahl der standardisierten Prozesse zu ermöglichen;
1.4.1 wobei der Anbieter durch die Auswahl der standardisierten Prozesse festlegt, welche der Personaldienstleistungen und/oder der mit den Personaldienstleistungen verbundenen Services der Anbieter mithilfe des Systems (100) digital anbietet,
1.4.2 welche der Personaldienstleistungen und/oder der mit den Personaldienstleistungen verbundenen Services der Anbieter mithilfe des Systems (100) digital verwaltet und
1.4.3 welche der Personaldienstleistungen und/oder der mit den Personaldienstleistungen verbundenen Services der Anbieter bei einem anderen Anbieter oder mehreren anderen Anbietern aus der Mehrzahl der Anbieter digital nachfragt; und
1.5 wobei das System (100) ausgebildet ist, um dem Anbieter aus der Mehrzahl der Anbieter zu ermöglichen, gemäß der Auswahl der standardisierten Prozesse die Personaldienstleistungen und die mit den Personaldienstleistungen verbundenen Services digital anzubieten, digital nachzufragen und/oder digital zu verwalten.

2. System (100) nach dem vorhergehenden Anspruch,
**dadurch gekennzeichnet,**
**dass** das System (100) Cloud-basiert und/oder ein verteiltes Rechnernetzwerk und/oder Teil eines verteilten Rechnernetzwerks ist.

3. System (100) nach einem der vorhergehenden Ansprüche,
**dadurch gekennzeichnet,**
**dass** die standardisierten Prozesse umfassen
3.1 Prozesse zum digitalen Anbieten und digitalen Nachfragen mindestens einer der Personaldienstleistungen und/oder mindestens eines der mit den Personaldienstleistungen verbundenen Services;
3.2 Prozesse zum digitalen Rekrutieren, digitalen Qualifizieren und/oder digitalen Managen von Personal zur Erbringung mindestens einer der Personaldienstleistungen und/oder mindestens eines der mit den Personaldienstleistungen verbundenen Services;
3.3 Prozesse zum elektronischen Kommunizieren;
3.4 Prozesse zur elektronischen Vertragserstellung und/oder zum elektronischen Signieren;
3.5 Prozesse zur elektronischen Dokumentenverwaltung;
3.6 Prozesse zum digitalen Controlling und/oder digitalen Dokumentieren einer erbrachten Personaldienstleistung und/oder eines erbrachten Service; und/oder
3.7 Prozesse zum digitalen Abrechnen einer erbrachten Personaldienstleistung und/oder eines erbrachten Service.

4. System (100) nach dem unmittelbar vorhergehenden Anspruch,
**dadurch gekennzeichnet,**
**dass** die Prozesse zum digitalen Rekrutieren umfassen
4.1 mindestens einen Prozess zum digitalen Ausschreiben von Stellen und/oder Anbieten von Personal;
4.2 mindestens einen Prozess zum digitalen Bewerbungsmanagement; und/oder
4.3 mindestens einen Prozess zum digitalen Erstellen und/oder digitalen Gestalten von Arbeitsverträgen.

5. System (100) nach einem der beiden unmittelbar vorhergehenden Ansprüche,
**dadurch gekennzeichnet,**
**dass** die Prozesse zum digitalen Qualifizieren umfassen
5.1 mindestens einen Prozess zum digitalen Ausbilden;
5.2 mindestens einen Prozess zum digitalen Schulen; und/oder
5.3 mindestens einen Prozess zum digitalen Trainieren.

6. System (100) nach einem der vorhergehenden Ansprüche 3 bis 5,
**dadurch gekennzeichnet,**
**dass** die Prozesse zum digitalen Managen umfassen
6.1 mindestens einen Prozess zur digitalen Arbeitseinteilung;
6.2 mindestens einen Prozess zum digitalen Erstellen eines Arbeits- und/oder Dienstplans;
6.3 mindestens einen Prozess zur digitalen Kalender- und/oder Terminverwaltung;
6.4 mindestens einen Prozess zur digitalen Lohn- und/oder Gehaltsabrechnung; und/oder
6.5 mindestens einen Prozess zum digitalen An- oder Abmelden bei mindestens einem Sozialversicherer.

7. System (100) nach einem der vorhergehenden Ansprüche 3 bis 6,
**dadurch gekennzeichnet,**
**dass** die Prozesse zum elektronischen Kommunizieren umfassen
7.1 mindestens einen Prozess zum Kommunizieren via E-Mails und/oder SMS und/oder einem Instant-Messaging-Dienst; und/oder
7.2 mindestens einen Prozess zum digitalen Telefonieren.

8. System (100) nach einem der vorhergehenden Ansprüche 3 bis 7,
**dadurch gekennzeichnet,**
**dass** die Prozesse zum digitalen Controlling umfassen
8.1 mindestens einen Prozess zur digitalen Laufzeitkontrolle; und/oder
8.2 mindestens einen Prozess zum digitalen Berichten eines Vorgangs, der mit mindestens einer der Personaldienstleistungen und/oder eines der mit den Personaldienstleistungen verbundenen Services verknüpft ist, eines Standorts und/oder eines Kunden-Feedbacks; und/oder
8.3 mindestens einen Prozess zum Bewerten der Zuverlässigkeit eines Anbieters aus der Mehrzahl der Anbieter.

9. System (100) nach einem der vorhergehenden Ansprüche,
**dadurch gekennzeichnet,**
**dass** mindestens einer der standardisierten Prozesse aus der Auswahl der standardisierten Prozesse zu einem bestimmten Zeitpunkt und/oder in regelmäßigen Intervallen ausgeführt wird.

10. System (100) nach einem der vorhergehenden Ansprüche,
**dadurch gekennzeichnet,**
**dass** das System (100) ausgebildet ist, um dem Anbieter aus der Mehrzahl der Anbieter über die mindestens eine digitale Schnittstelle (110, 120, 130) eine Änderung der Auswahl der standardisierten Prozesse zu ermöglichen.

11. System (100) nach einem der vorhergehenden Ansprüche,
**dadurch gekennzeichnet**,
11.1 dass das System (100) mit einer digitalen Administratorschnittstelle (110, 120, 130) ausgestattet ist, die es einem Administrator des Systems (100) ermöglicht, dem System (100) einen neuen standardisierten Prozess hinzuzufügen oder einen standardisierten Prozess zu ändern; und/oder
11.2 dass die mindestens eine digitale Schnittstelle (110, 120, 130) ausgestaltet ist, um es einem Administrator des Systems (100) zu ermöglichen, dem System (100) einen neuen standardisierten Prozess hinzuzufügen oder einen standardisierten Prozess zu ändern.

12. Verfahren (300) zum digitalen Anbieten, digitalen Nachfragen und/oder digitalen Verwalten mindestens einer Personaldienstleistung und/oder mindestens eines mit einer Personaldienstleistung verbundenen Service eines Anbieters, wobei die mindestens eine Personaldienstleistung und/oder der mindestens eine mit einer Personaldienstleistung verbundene Service mithilfe eines Systems (100) nach einem der vorhergehenden Ansprüche digital angeboten (330), digital nachgefragt und/oder digital verwaltet wird.

13. Verfahren (300) nach dem unmittelbar vorhergehenden Anspruch,
13.1 wobei dem Anbieter mithilfe der mindestens einen digitalen Schnittstelle (110, 120, 130) digitaler Zugriff auf das System (100) gewährt (310) wird; und
13.2 wobei dem Anbieter eine Auswahl aus den standardisierten Prozessen des Systems ermöglicht (320) wird; und
13.3 wobei das digitale Anbieten (330), das digitale Nachfragen und/oder das digitale Verwalten gemäß der Auswahl der standardisierten Prozesse durch den Anbieter erfolgt.

14. Computerprogramm, umfassend Befehle, die bewirken, dass ein System (100) nach einem der vorhergehenden Ansprüche 1 bis 11 die Verfahrensschritte eines Verfahrens (300) nach einem der Ansprüche 12 oder 13 ausführt.

15. Computerlesbares Medium, auf dem das Computerprogramm nach dem unmittelbar vorhergehenden Anspruch gespeichert ist.
